# EUROPEAN PATENT APPLICATION

(11) **EP 4 813 193 A1**
(43) Date of publication of application: **30.09.2026**
(21) Application number: 26161603.1
(22) Date of filing: 02.03.2026
(51) Int. Cl.: A01D 43/08

(54) **HARVESTING HEAD FOR MACHINES FOR HARVESTING PLANTS IN A FIELD**

(30) Priority: 25.03.2025 IT 202500006042
(71) Applicant: NARDI SRL, 37040 Veronella (VR) (IT)
(72) Inventor: NARDI, Alessandro, 36045 LONIGO VI (IT)
(74) Representative: Modiano, Micaela Nadia

(57) **Abstract**

A harvesting head for machines for harvesting plants grown in a field, which comprises a base structure (2), which is adapted to be connected to the front part of a plant harvesting machine (3), which can move over ground along an advancement direction (100), the base structure supporting a plurality of harvesting units (4) which are laterally adjacent to each other and which each have a respective longitudinal passage (4a) which is designed to be axially passed through by the plants to be harvested; arranged above the harvesting units (4) there is a plurality of covering bodies (9), which each define a respective receptacle (9a) which is adapted to receive parts of the plants to be harvested; the base structure (2) supports a conveyance screw feeder (11), arranged downstream of the harvesting units (4); for at least one of the covering bodies (9), there is at least one respective blower device (12) driven by a corresponding electric motor and configured to generate at least one air flow that passes through the receptacle of the corresponding covering body (9) in the direction of the conveyance screw feeder (11).

## Description

The present invention relates to a harvesting head for machines for harvesting plants grown in a field.

As is known, machines designed to harvest plants grown in a field, such as combine harvesters or similar apparatuses, are provided, at the front part with respect to the advancement direction, with a harvesting head which extends transversely with respect to the advancement movement of the machine itself.

Such harvesting head makes it possible to harvest plants grown in a field which are in rows placed at a preset distance from each other.

In particular, the harvesting head is provided with a plurality of harvesting units, also called "row assemblies", which are arranged mutually side by side along the extension of the head and are each designed to harvest the plants located in the field along a respective row.

More specifically, each harvesting unit is provided with a longitudinal passage, which is open on the front side of the harvesting head and which extends parallel to the direction of motion of the machine.

Such longitudinal passage is intended to be passed through by the plants of a specific row, during the advancement of the machine, and leads into a collection chamber.

Along the passage of each harvesting unit there are cutting means which make it possible to separate the plants from the ground in order to enable them to be harvested.

At its end opposite from the end where the plants enter, each longitudinal passage leads into a collection chamber, which extends transversely to the advancement movement of the machine and inside which a conveyance screw feeder operates which makes it possible to convey the plants cut in the various harvesting units toward a common collection area.

In detail, the longitudinal passage of each harvesting unit is delimited by a pair of mutually opposite dragging elements, which push the plants inside them, during the movement of the machine, guiding them toward the conveyance screw feeder.

Generally, these dragging elements are constituted by two chains closed in loops, optionally fitted with teeth arranged in an offset fashion.

The chains travel between two pulleys, each chain defining an active portion that extends along the longitudinal edge of the passage, in order to perform the dragging of the plants toward the conveyance screw feeder.

Above the harvesting units, the harvesting head is provided with the covering bodies, each one of which is positioned between the longitudinal passages of two contiguous harvesting units.

The shape of these covering bodies is generally similar to a "pan" or "platter", so as to define a receptacle, upwardly open, which enables the collection inside it of the parts of the plants that are cut, while the dragging elements drag the plants proper toward the conveyance screw feeder.

Generally, the covering bodies are configured with a surface that slopes downhill toward the conveyance screw feeder, so that the parts of plants that gradually fall onto the covering bodies of the harvesting head can then run off toward the conveyance screw feeder by gravity, as well as by the thrust received by the plants proper which are dragged by the dragging elements of the harvesting units.

When harvesting castor oil plants, the drawback arises whereby the slightly hooked prickles that cover the capsules of the seeds of these plants tend to make the seeds falling on the covering bodies grip each other, thus impeding their regular flow toward the conveyance screw feeder.

The material accumulated on the covering bodies therefore tends to build up, often reaching the point where it spills over and out, so generating losses of harvest.

In order to prevent this, the operator of the combine harvester is forced to stop and lift the head upward, in order to shed the buildup of plants on the covering bodies toward the conveyance screw feeder, with consequent interruption of harvesting operations.

The aim of the present invention is to provide a harvesting head for machines for harvesting plants grown in a field that is capable of improving the known art in one or more of the abovementioned aspects.

Within this aim, an object of the invention is to provide a harvesting head for machines for harvesting plants grown in a field that is capable of effectively preventing the buildup of material on the covering bodies of said head and the loss of product, in particular when harvesting castor oil plants.

Another object of the invention is to provide a harvesting head that is capable of ensuring the efficacious collection of all the product that builds up on each one of the covering bodies.

A further object of the invention is to provide a harvesting head that makes it possible to avoid interruptions of harvesting operations owing to an excess buildup of material on the covering bodies of the head proper.

A still further object of the present invention is to overcome the drawbacks of the background art in a manner that is alternative to any existing solutions.

Another object of the invention is to provide a harvesting head that is highly reliable and relatively easy to implement, so that it can be produced at low cost.

This aim and these and other objects which will become more apparent hereinafter are achieved by a harvesting head for machines for harvesting plants grown in a field according to claim 1, optionally provided with one or more of the characteristics of the dependent claims.

Further characteristics and advantages of the invention will become more apparent from the detailed description that follows of a preferred, but not exclusive, embodiment of a harvesting head for machines for harvesting plants grown in a field according to the invention, which is illustrated for the purposes of non-limiting example in the accompanying drawings wherein:

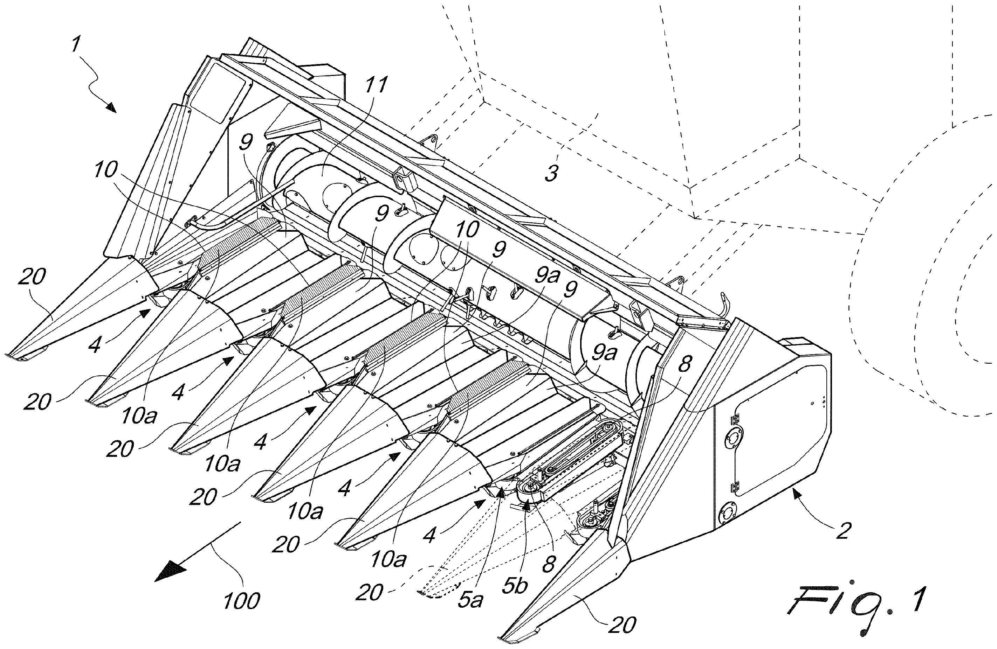

Figure 1 is a partially transparent perspective view of the harvesting head according to the invention;

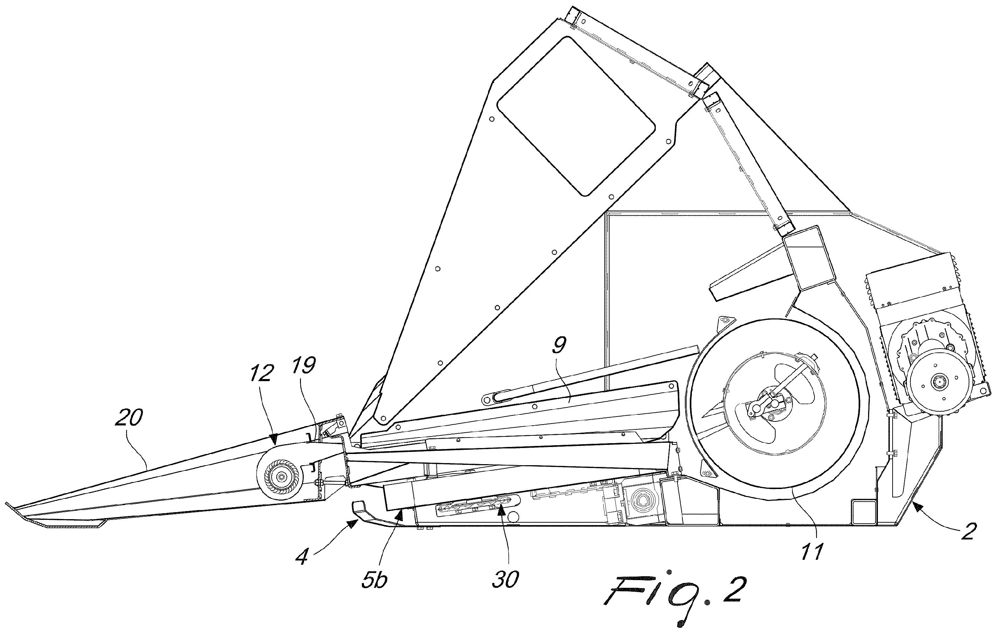

Figure 2 is a cross-sectional view of the harvesting head according to the invention;

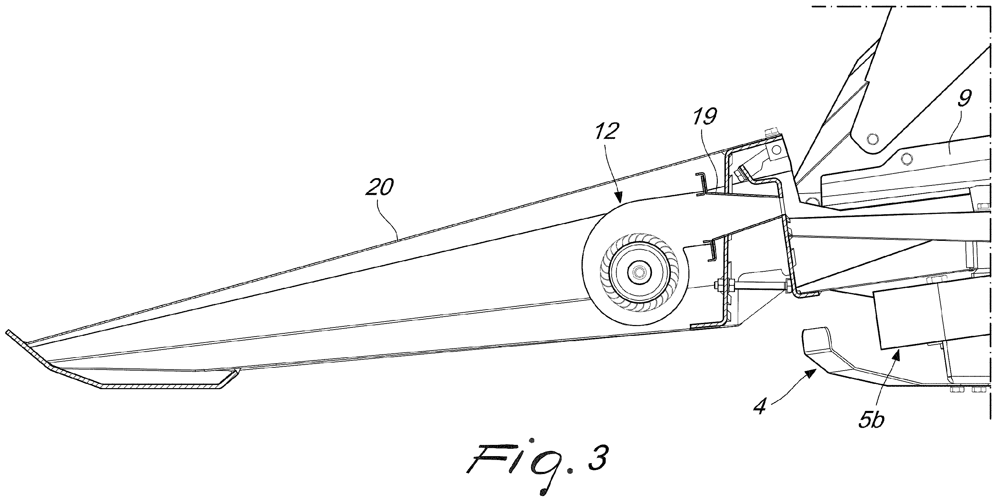

Figure 3 is a detail of the cross-section of Figure 2;
Figure 4 is a partially transparent plan view from above of the harvesting head according to the invention, showing a diagram of the electric power supply to the blower devices of the head;

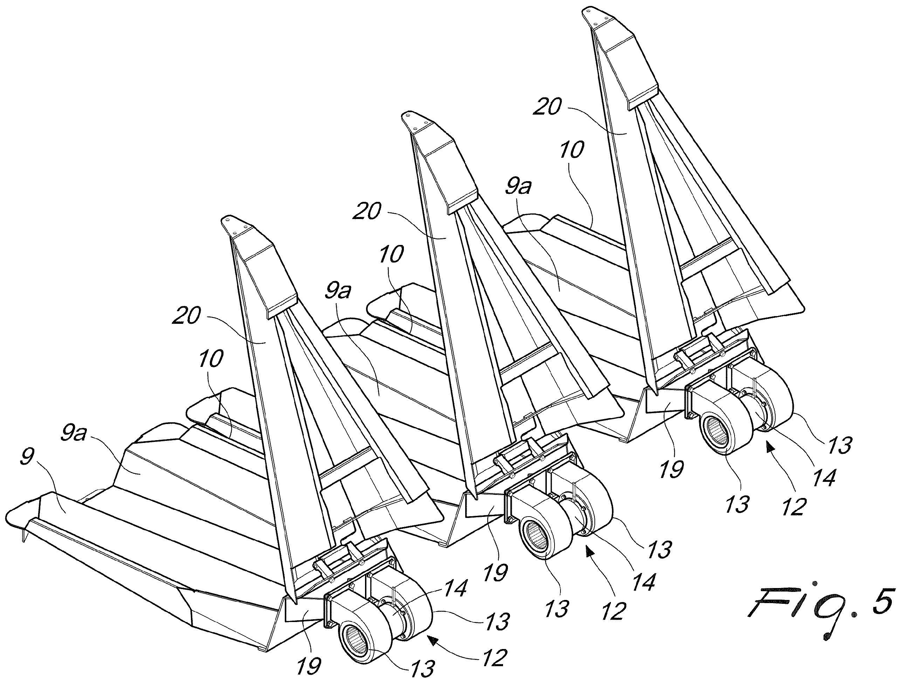

Figure 5 is a perspective view of a portion of the harvesting head according to the invention, with parts omitted for the sake of simplicity and with a casing for covering the blower devices in the raised position.

With reference to the figures, the harvesting head for machines for harvesting plants grown in a field according to the invention, generally designated by the reference numeral 1, comprises a base structure 2 configured to be connected to the front part of a machine 3 for harvesting plants grown in a field, such as, for example, a combine harvester or the like.

The machine 3 can move over ground along an advancement direction 100 and the base structure 2 of the head extends substantially transversely to the advancement direction 100 of the machine proper.

In particular, the base structure 2 supports a plurality of harvesting units 4 or row assemblies, which are laterally adjacent to each other and which each have a respective longitudinal passage 4a, which is designed to be axially passed through by the plants to be harvested.

The longitudinal passage 4a of each harvesting unit 4 is longitudinally delimited by a pair of dragging elements 5a, 5b, which are mutually opposite and configured to push the plants along the longitudinal passage 4a.

In particular, such dragging elements 5a and 5b are, for example, provided, in a manner in and of itself known, by respective closed loop chains 6, optionally provided with engagement teeth (not shown), which run between a respective pair of pulleys 8.

Along the longitudinal passage 4a of each harvesting unit 4, there can be means for cutting the plants, which are constituted, for example, by rotating disk-like blades 30.

Arranged above the harvesting units 4 there is a plurality of covering bodies 9, each of which defines a respective receptacle 9a which is configured to receive parts of the plants to be harvested which fall during the dragging performed by the dragging elements 5a, 5b.

The covering bodies 9 are separated from each other by slits 10, each one located above the longitudinal passage 4a of a respective harvesting unit 4, so as to allow the plants to pass between them.

Optionally, along the edges of the slits 10 there can be brushes 10a, in order to prevent parts of plants from falling to the ground through the slits 10.

The base structure 2 further supports a conveyance screw feeder 11, arranged with its axis substantially transverse to the advancement direction 100 of the machine and located downstream of the harvesting units 4, according to the dragging direction of the plants imparted by the dragging elements 5a, 5b.

One of the particularities of the invention consists in that it comprises, for at least one of the covering bodies 9, at least one respective blower device 12, driven by at least one corresponding electric motor 14 and configured to generate at least one air flow that passes through the receptacle 9a of the corresponding covering body in the direction of the conveyance screw feeder 11, in order to push, using the flow of air generated by the blower device 12, the plant parts that have fallen into the receptacle 9a toward the conveyance screw feeder 11, so preventing their buildup in the receptacle 9a.

Conveniently, there is at least one blower device 12 for each one of the covering bodies 9, so as to ensure that no excessive buildup can occur in any of the covering bodies 9 of plant parts that have fallen into it.

It should be noted that the direction of the air flow generated by the blower device 12 has at least one component which is substantially parallel to the advancement direction 100 and perpendicular to the direction of mutual flanking of the covering bodies 9, in order to ensure effective pushing of the plant parts that have fallen into the receptacle 9a toward the conveyance screw feeder 11.

Conveniently, the blower device 12 of each covering body 9 is supported by the corresponding covering body itself.

Advantageously, the blower device 12 of each one of the covering bodies 9 comprises a respective impeller 13, which is driven in rotation by the corresponding electric motor 14.

More preferably, each blower device 12 comprises at least one pair of impellers 13 which are mutually coaxial and driven by a conventional electric motor 14.

Conveniently, the blower device 12 of each covering body 9 is mounted substantially at the end of the corresponding covering body 9 that is located opposite from the conveyance screw feeder 11, so that the air flow generated can pass through the entire receptacle 9a toward the conveyance screw feeder 11.

Advantageously, there are control means 15, such as for example a programmable electronic controller, which are functionally connected to the electric motor 14 of each blower device 12.

Such control means 15 are configured to allow an actuation of each blower device 12 independently of the others, so as to be able to diversify the air flow between the various covering bodies 9 and so ensure an optimal flow of the material built up on each covering body 9 toward the conveyance screw feeder 11.

Conveniently, the electric motor 14 of each blower device 12 is electrically powered by an electricity generator 16, such as, for example, an alternator, mounted on board the harvesting head or the machine 3, and operable via a power take-off 17, associated with the machine 3, for example by way of a universal joint 18 or the like.

Advantageously, the blower device 12 of each one of the covering bodies 9 is connected to the receptacle 9a by way of an air diffusion duct 19 with tapered walls, the function of which is to accelerate and distribute the air flow that is directed toward the receptacle 9a, in order to ensure a solid thrust from the air on all of the material that tends to build up in the receptacle 9a.

Conveniently, the blower device 12 of each covering body 9 is placed inside a pointed casing 20 which is arranged at the end of the corresponding covering body 9 that faces away from the conveyance screw feeder 11.

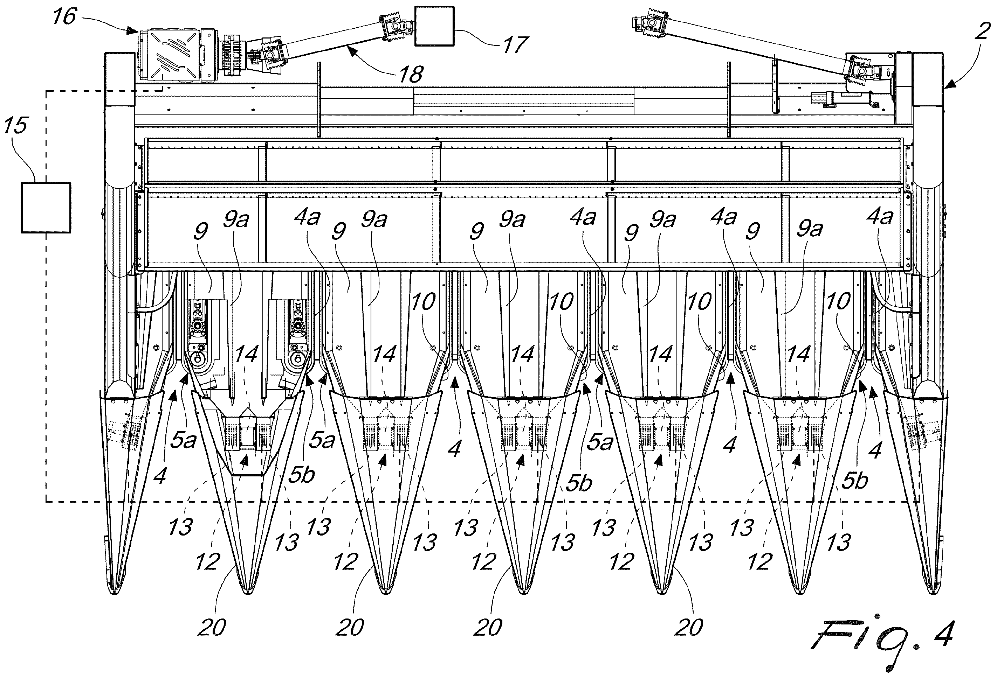

Advantageously, the casing 20 is pivoted to the corresponding covering body 9, so as to allow it to be lifted and as a consequence allow the underlying blower device 12 to be accessed from outside, as shown in Figure 4.

The operation of the harvesting head according to the invention is the following.

During the advancement of the machine 3 on the field, the plants in a given row enter the longitudinal passage 4a of a corresponding harvesting unit 4, and are dragged, along the longitudinal passage 4 and the slit 10 present between the corresponding covering bodies 9, by the dragging elements 5a, 5b toward the conveyance screw feeder 11.

The parts of the plants to be harvested which are detached from the plants that pass longitudinally through the longitudinal passage 4 and the slit 10 fall into the receptacles 9a of the adjacent covering bodies 9, where they are subjected to a push toward the conveyance screw feeder 11 by the air flow generated by the corresponding blower devices 12, which prevents them from building up excessively with the consequent risk of overflowing onto the ground and the resultant loss of product.

In practice it has been found that the invention achieves the set aim and objects and in particular attention is drawn to the fact that the harvesting head according to the invention makes it possible to provide a rapid and efficacious harvesting of the plants, while preventing their buildup on the covering bodies of the head and the consequent risk of their falling to the ground.

In particular, attention is drawn to the fact that in, experiments, the harvesting head according to the invention has been shown to be particularly effective in the harvesting of plants such as castor oil plants, which by their nature tend to form clumps that are difficult to handle in the prior art.

The invention thus conceived is susceptible of numerous modifications and variations, all of which are within the scope of the appended claims. Moreover, all the details may be substituted by other, technically equivalent elements.

In practice, the materials used, as well as the contingent shapes and dimensions, may be any according to the requirements and to the state of the art.

The disclosures in Italian Patent Application No. 102025000006042 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A harvesting head for machines for harvesting plants grown in a field, comprising a base structure (2) configured to be connected to a front part of a plant harvesting machine (3), which can move over ground along an advancement direction (100), and extending substantially transversely to said advancement direction (100), said base structure (2) supporting a plurality of harvesting units (4) which are laterally adjacent to each other and which each have a respective longitudinal passage (4a) which is designed to be axially passed through by the plants to be harvested and is longitudinally delimited by a pair of dragging elements (5a, 5b), which are mutually opposite and adapted to push the plants along said longitudinal passage (4a), arranged above said harvesting units (4) there being a plurality of covering bodies (9), each defining a respective receptacle (9a) which is configured to receive parts of the plants to be harvested, said covering bodies being separated from each other by slits (10), each located above the longitudinal passage (4a) of a respective harvesting unit (4), said base structure (2) supporting a conveyance screw feeder (11), arranged with its axis substantially transverse to the advancement direction of the machine (3) and located downstream of the harvesting units (4), according to the dragging direction of the plants imparted by said dragging elements (5a, 5b), **characterized in that** it comprises, for at least one of said covering bodies (9), at least one respective blower device (12) driven by at least one corresponding electric motor (14) and configured to generate at least one air flow that passes through the receptacle (9a) of the corresponding covering body (9) in the direction of said conveyance screw feeder (11).

2. The harvesting head according to claim 1, **characterized in that** it comprises at least one blower device (12) for each of said covering bodies (9).

3. The harvesting head according to claim 2, **characterized in that** said blower device (12) is supported by the corresponding covering body (9).

4. The harvesting head according to claim 2, **characterized in that** the air flow generated by said at least one blower device (12) has a direction which has at least one component that is substantially parallel to said advancement direction (100).

5. The harvesting head according to claim 2, **characterized in that** the blower device (12) of each of said covering bodies (9) comprises a respective impeller (13) which is driven in rotation by the corresponding electric motor (14).

6. The harvesting head according to one or more of the preceding claims, **characterized in that** the blower device (12) of each covering body (9) is mounted substantially at the end of the corresponding covering body (9) that is located opposite from said conveyance screw feeder (11).

7. The harvesting head according to one or more of the preceding claims, **characterized in that** it comprises control means (15) which are functionally connected to the electric motor (14) of each blower device (12), said control means (15) being configured to allow independent actuation of each blower device (12) with respect to the others.

8. The harvesting head according to one or more of the preceding claims, **characterized in that** the electric motor (14) of each blower device (12) is electrically powered by an electricity generator (16) which can be driven by a power take-off (17) associated with said machine (3).

9. The harvesting head according to one or more of the claims, **characterized in that** the blower device (12) of each of said covering bodies (9) is in communication with the corresponding receptacle (9a) through an air diffusion duct (19) with tapered walls.

10. The harvesting head according to one or more of the preceding claims, **characterized in that** the blower device (12) of each covering body (9) is placed inside a pointed casing (20) arranged at the end of the corresponding covering body (9) that faces away from said conveyance screw feeder (11).
